(19) Europäisches Patentamt
European Patent Office
Office européen des brevets

(11) Veröffentlichungsnummer: **0 625 553 A1**

# (12) EUROPÄISCHE PATENTANMELDUNG

(21) Anmeldenummer: **94107463.5**

(22) Anmeldetag: **13.05.94**

(51) Int. Cl.[5]: **C09B 69/10**, C08G 63/685, G02F 1/35

(30) Priorität: **21.05.93 DE 4317094**

(43) Veröffentlichungstag der Anmeldung: **23.11.94 Patentblatt 94/47**

(84) Benannte Vertragsstaaten: **DE FR GB**

(71) Anmelder: **BASF Aktiengesellschaft**
**Carl-Bosch-Strasse 38**
**D-67063 Ludwigshafen (DE)**

(72) Erfinder: **Etzbach, Karl-Heinz, Dr.**
**Jean-Ganss-Strasse 46**
**D-67227 Frankenthal (DE)**
Erfinder: **Sens, Ruediger, Dr.**
**Medicusstrasse 12**
**D-68165 Mannheim (DE)**
Erfinder: **Beckmann, Stefan, Dr.**
**Neckarpromenade 16**
**D-68167 Mannheim (DE)**

## (54) Polyester mit nichtlinear optischen Chromophoren und deren Verwendung.

(57) Die Erfindung betrifft Polyester mit nichtlinear optischen Chromophoren, die mittlere Molekulargewichte $\overline{M}_w$ zwischen 5000 und 500 000 aufweisen und Einheiten der allgemeinen Formel (I)

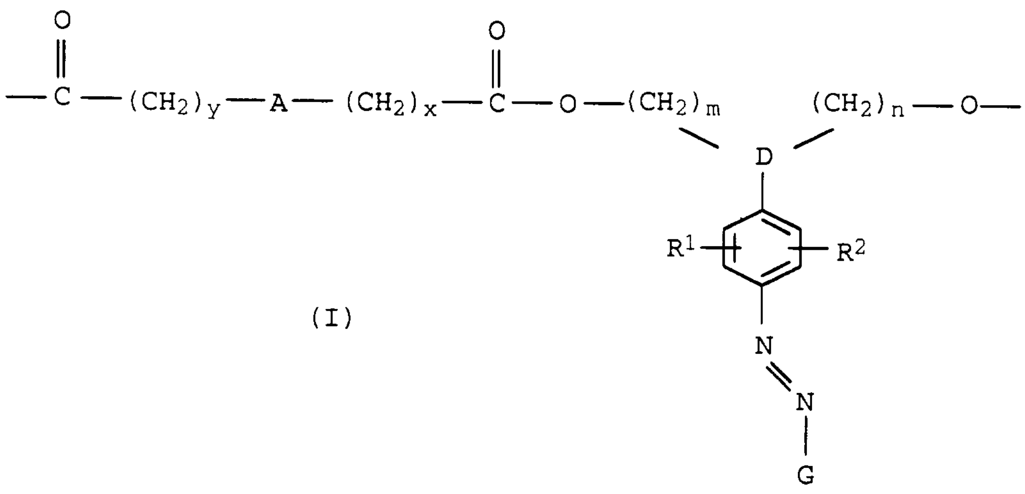

(I)

enthalten, worin

| | |
|---|---|
| A | für einen zweiwertigen Rest, |
| D | für einen Elektronendonor, |
| G | für einen heterocyclischen Ring als Elektronenakzeptor, |
| x und y | für untereinander gleiche oder verschiedene Zahlen, |
| m und n | für untereinander gleiche oder verschiedene Zahlen und |
| $R^1$ und $R^2$ | untereinander gleiche oder verschiedene Reste sind. |

Die erfindungsgemäßen Polyester eignen sich beispielsweise als Bauelemente in der Nachrichtentechnik.



Rank Xerox (UK) Business Services
(3.10/3.09/3.3.4)

Die Erfindung betrifft Polyester mit nichtlinear optischen Chromophoren, insbesondere solche, die Azofarbstoffe mit heterocyclischen Komponenten enthalten. Infolge ihrer nichtlinear optischen Eigenschaften eignen sich diese Polyester für Bauelemente in der Nachrichtentechnik.

Polymere auf Polyesterbasis mit nichtlinear optischen Chromophoren, die Nitroazofarbstoffe und Stilbene enthalten, sind bereits bekannt und beispielsweise in US-A-4 757 130, FR-A-26576083 bzw. von M. Chen und L. YU in Macromoleculus 24 (1991), 5421 beschrieben.

Es hat sich jedoch gezeigt, daß solche Polyester bei ihrer Anwendung in nichtlinear optischen Systemen noch Mängel aufweisen.

Aufgabe der vorliegenden Erfindung war es nun, neue Polyester bereit zustellen, die Azofarbstoffe als Chromophor in der Seitenkette enthalten und vorteilhaft zur Anwendung in nichtlinear optischen Systemen geeignet sein sollten.

Azofarbstoffe mit heterocyclischen Komponenten an sich sind bekannt und finden Anwendung in vielen Bereichen, so z.B. in der Textilfärbung.

Ihre Einarbeitung in Polyester brachte jedoch einen überraschenden Effekt auf die nichtlinear optischen Eigenschaften solcher Systeme.

Gegenstand der vorliegenden Erfindung sind Polyester mit nichtlinear optischen Chromophoren, die dadurch gekennzeichnet sind, daß sie mittlere Molekulargewichte $\overline{M}_w$ zwischen 5000 und 500 000 aufweisen und Einheiten der allgemeinen Formel (I)

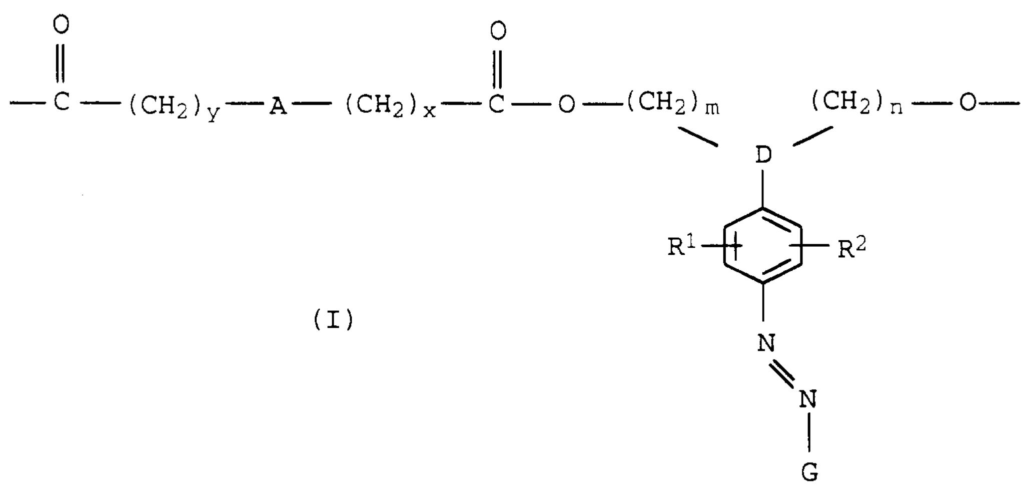

(I)

enthalten, worin

| | |
|---|---|
| A | für Phenylen mit 1 bis 4 $C_1$- bis $C_6$-Alkyl- oder $C_1$- bis $C_6$-Alkoxygruppen substituiertes Phenylen, Naphthylen, Cycloalkylen mit 3 bis 8 Kohlenstoffatomen, Alkylen mit 1 bis 10 Kohlenstoffatomen oder eine Einfachbindung, |
| D | für einen Elektronendonor, |
| G | für einen heterocyclischen Ring als Elektronenakzeptor, |
| x und y | für untereinander gleiche oder verschiedene Zahlen von 0 bis 10, |
| m und n | für untereinander gleiche oder verschiedene Zahlen von 1 bis 10 stehen, |
| $R^1$ und $R^2$ | untereinander gleich oder verschieden sind und für Wasserstoff, Alkyl mit 1 bis 6 Kohlenstoffatomen, Alkoxy mit 1 bis 6 Kohlenstoffatomen, durch Phenyl oder $C_1$- bis $C_4$-Alkoxy substituiertes Alkyl, CN, $NO_2$, $SO_3H$, CHO oder eine vernetzungsfähige Gruppierung stehen. |

Der heterocyclische Ring als Elektronenakzeptor G steht insbesondere für einen Rest der allgemeinen Formeln

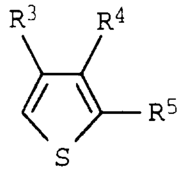
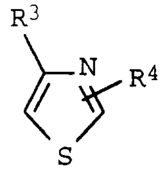
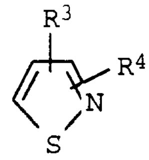
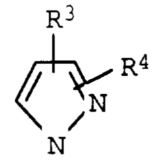
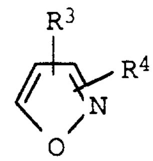

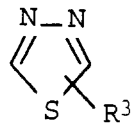
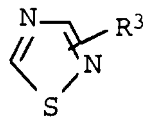
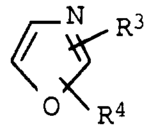
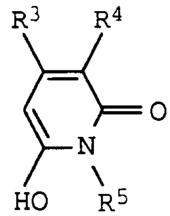

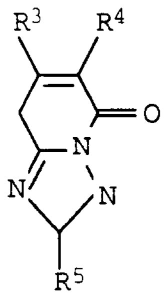
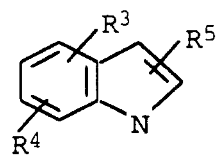

oder

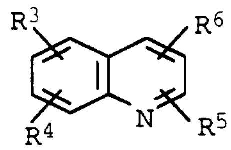

worin

R$^3$ bis R$^6$ untereinander gleich oder verschieden sind und für Alkyl mit 1 bis 10 Kohlenstoffatomen, Cycloalkyl mit 3 bis 8 Kohlenstoffatomen, Alkoxy mit 1 bis 8 Kohlenstoffatomen, Halogen, CN, $NO_2$, $CONH_2$, $CONR^7_2$ , $COOR^7$, $(CH_2)_z$-$COOR^7$,

$R^7$ = Alkyl mit 1 bis 10 Kohlenstoffatomen und z = 1 bis 10 oder Alkenyl mit 2 bis 10 Kohlenstoffatomen stehen oder jeweils zwei der Reste R$^3$ bis R$^6$ miteinander anellierte Ringe bilden.

Bevorzugt steht in der allgemeinen Formel (I) der Elektronendonor D für NR$^8$ , wobei R$^8$ $C_1$- bis $C_6$-Alkyl, $C_2$- bis $C_6$-Alkenyl, $C_5$- bis $C_7$-Cycloalkyl, Phenyl, Tolyl, Benzyl oder eine vernetzungsfähige Gruppierung bedeuten.

Beispiele für vernetzungsfähige Gruppierungen in den erfindungsgemäßen Polyestern sind insbesondere Zimtsäure-, Oxiran-, Acrylat-, Methacrylat-, Vinyl-, Vinylester-, Vinylether-, CN-, $NO_2$-, - $SO_3H$ oder -CHO Reste.

Gegenstand der vorliegenden Erfindung ist auch die Verwendung der erfindungsgemäßen Polyester in der nichtlinearen Optik sowie in Bauelementen für die Nachrichtentechnik.

Mit den erfindungsgemäßen nichtlinear optischen Chromophore mit heterocyclischen Ringen enthaltenden Polyestern gelingt es, wesentliche Verbesserungen zu erzielen.

Zum einen zeigen die erhaltenen Polymere gute nichtlinear optische Werte, zum anderen ist eine gute Schichtbildung mit geringeren optischen Verlusten bei der Lichtführung möglich.

Insbesondere ist hierbei die Eignung der Polyester in der Nachrichtentechnik, in optischen Modulatoren (z.B. Mach-Zehnder-Interferometer), in optischen Schaltern, bei der Frequenzmischung oder in Wellenleitern hervorzuheben.

Zum Aufbau der erfindungsgemäßen Polyester und bezüglich ihrer Verwendung ist im einzelnen folgendes auszuführen.

Sowohl die Herstellung der erfindungsgemäßen Polyester als auch die der zugrundeliegenden Chromophore kann nach üblichen und bekannten Methoden der organischen Chemie erfolgen, wie sie beispielsweise in March, "Advanced Organic Chemistry bzw. in Organicum, 16. Auflage beschrieben sind.

Die Herstellung der als Ausgangsmaterialien für die Polyester einzusetzenden monomeren Azofarbstoffe mit heterocyclischen Komponenten kann beispielsweise durch Umsetzung entsprechend substituierter Aminogruppen tragender Heterocyclen in stark saurem Medium mit Nitrosylschwefelsäure erfolgen. Die so erhaltenen Diazoniumsalzlösungen lassen sich dann mit N,N-Bis(hydroxyalkyl)anilin in stark saurem Medium (conc. Schwefelsäure + Amidoschwefelsäure) umsetzen (möglichst bei Temperaturen von $< 5\,^\circ C$) und durch Zugabe von Alkalilauge isolieren und auf übliche Weise (beispielsweise durch Umkristallisieren)

reinigen. Die so erhältlichen Bishydroxyverbindungen lassen sich dann beispielsweise durch Umsetzung mit etwa äquimolaren Mengen Terephthalsäuredichlorid in die erfindungsgemäßen Polyester überführen und auf übliche Weise (beispielsweise durch Umfällen) reinigen.

Die erfindungsgemäßen Polyester mit nichtlinear optischen Eigenschaften weisen im allgemeinen mittlere Molekulargewichte $\overline{M}_w$ zwischen 5000 und 500 000, vorzugsweise zwischen 10.000 und 100.000 auf.

Sie enthalten oder bestehen aus Einheiten der allgemeinen Formel (I)

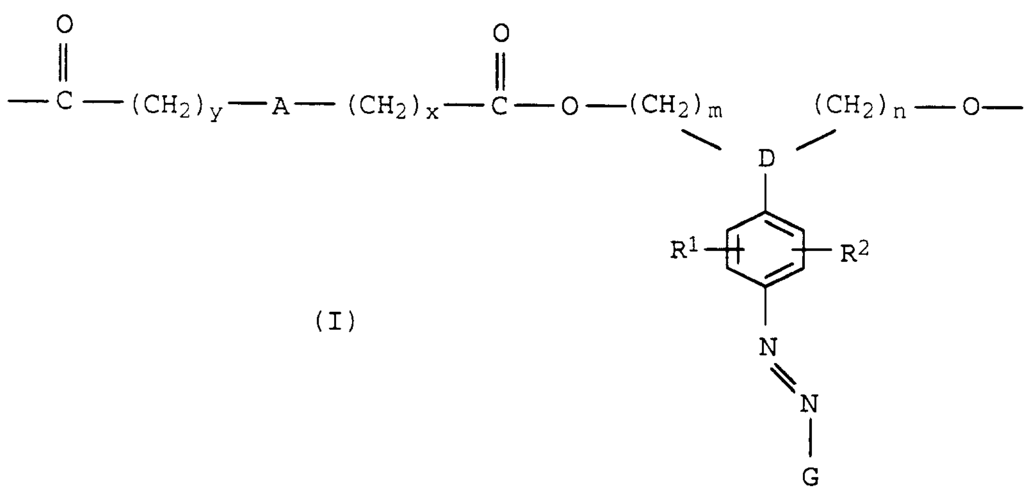

(I)

worin

A für Phenylen, mit 1 bis 4 $C_1$- bis $C_6$-Alkyl-, z.B. Methyl, Ethyl, Propyl, Isopropyl, n-Butyl, Isobutyl, tert.-Butyl, Hexyl, Octyl, 2-Ethylhexl, oder $C_1$- bis $C_6$-Alkoxygruppen, z.B. Methoxy, Ethoxy, Propoxy, Butoxy, substituiertes Phenylen, Naphthylen, Cycloalkylen mit 3 bis 8 Kohlenstoffatomen, z.B. Cyclohexyl, Alkylen mit 2 bis 10 Kohlenstoffatomen oder eine Einfachbindung,

D für einen Elektronendonor, insbesondere $NR^8$, worin $R^8$ für $C_1$- bis $C_6$-Alkyl, beispielsweise Methyl, Ethyl, Propyl, Isopropyl, Butyl, Hexyl, $C_2$- bis $C_6$-Alkenyl, beispielsweise Vinyl, Allyl, $C_5$- bis $C_7$-Cycloalkyl, wie z.B. Cyclopentyl, Cyclohexyl oder Cycloheptyl, Phenyl, Tolyl, Benzyl oder eine vernetzungsfähige Gruppierung, wie ein Zimtsäure-, Oxiran-, Acrylat-, Methacrylat-, Vinyl-, Vinylester-, Vinyletherrest oder CN, $NO_2$, $SO_3H$ oder CHO sein können;

G für einen heterocyclischen Ring als Elektronenakzeptor, insbesondere für einen Rest der allgemeinen Formeln

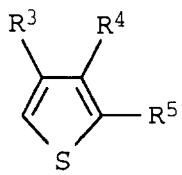 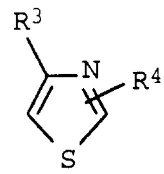 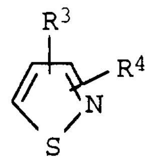 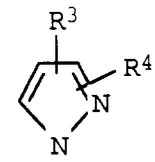 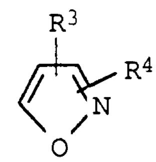

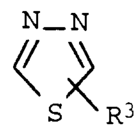 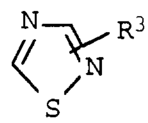 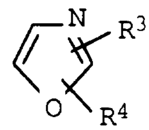 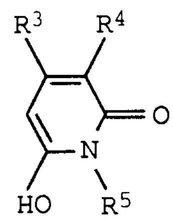

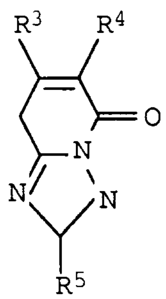 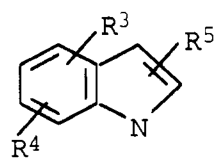 oder 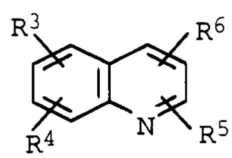

steht, worin

$R^3$ bis $R^6$ untereinander gleich oder verschieden sind und für Alkyl mit 1 bis 10 Kohlenstoffatomen, beispielsweise Methyl, Ethyl, n-Propyl, Isopropyl, n-Butyl, Isobutyl, Hexyl, Heptyl, Octyl, Decyl, Cycloalkyl mit 3 bis 8 Kohlenstoffatomen, z.B. Methyl, Ethyl, Butyl, Hexyl, Octyl, Alkoxy mit 1 bis 8 Kohlenstoffatomen, beispielsweise Methoxy, Ethoxy, Propoxy, Butoxy, Halogen, wie z.B. Fluor, Chlor, Brom oder Jod, CN, $NO_2$, $COOR_7$, $(CH_2)_z$-$COOR^7$ mit $R^7$ = Alkyl mit 1 bis 10 Kohlenstoffatomen und z = 1 bis 10, oder Alkenyl mit 2 bis 10 Kohlenstoffatomen, wie z.B. Vinyl, Allyl, stehen oder jeweils zwei der Reste $R^3$ bis $R^6$ miteinander anellierte Ringe wie z.B. Naphthyl bilden;

x und y für untereinander gleiche oder verschiedene Zahlen von 0 bis 10, vorzugsweise 0 bis 4, sowie

m und n für untereinander gleiche oder verschiedene Zahlen von 1 bis 10, vorzugsweise von 2 bis 5 stehen;

$R^1$ und $R^2$ untereinander gleich oder verschieden sind und für Wasserstoff, Alkyl mit 1 bis 6 Kohlenstoffatomen, z.B. Methyl, Ethyl, n-Propyl, Isopropyl, n-Butyl, Isobutyl, Pentyl, Hexyl, Alkoxy mit 1 bis 6 Kohlenstoffatomen, z.B. Methoxy, Ethoxy, Propoxy, Butoxy, durch Phenyl oder $C_1$- bis $C_4$-Alkoxy substituiertes Alkyl, z.B. Methylmethoxy, CN, $NO_2$, $SO_3H$, CHO oder eine vernetzungsfähige Gruppierung der bereits oben unter $R^8$ genannten Art stehen.

Beispiele für bevorzugte Chromophore mit heterocyclischen Ringen sind:

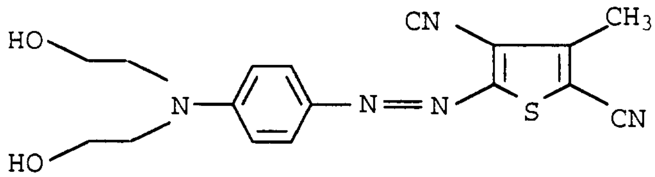

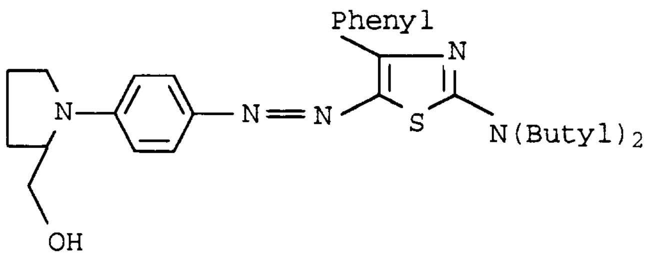

Die Herstellung von Schichten, die die erfindungsgemäßen Polyester enthalten, erfolgt in an sich bekannter Weise, z.B. durch Naßbeschichtung (Spin coating) mit einer 5 - 15 %igen Lösung des Polyesters in einem Lösungsmittel (z.B. Tetrachlorethan, Methylenchlorid, Tetrahydrofuran).

Geeignete Substrate sind dabei z.B. Indium-Zinn-Oxid (= ITO) u.a. Bei geeignetem Substitutionsmuster (z.B. Epoxystruktur) können die Polymere auch photochemisch, thermisch oder durch die Einwirkung von Elektronenstrahlen vernetzt werden.

Die neuen Polyester zeichnen sich durch gute Verarbeitbarkeit zu dünnen Schichten, hohe Reinheit, enge Molekulargewichtsverteilung, gute Orientierung im elektrischen Feld, gute Langzeitstabilität und gute elektrooptische Koeffizienten aus.

Die in den Beispielen genannten Teile und Prozente sind, soweit nicht anders angegeben, Gewichtsteile bzw. Gewichtsprozente.

I. Herstellung von monomeren Azofarbstoffen mit heterocyclischen Komponenten

Beispiel 1

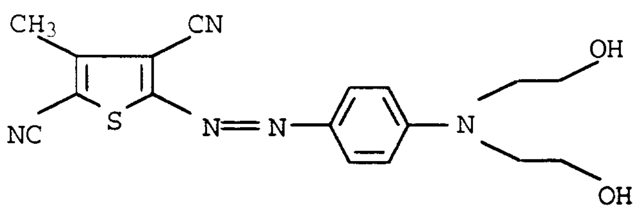

1,63 g (0,01 mol) 2-Amino-3,5-dicyan-4-methylthiophen wurden in 50 g Eisessig/Propionsäure (17:3 v/v) aufgerührt. Anschließend wurden 7 g 85 gew.-%ige Schwefelsäure bei Raumtemperatur und 3 g Nitrosylschwefelsäure bei 0 bis + 5 °C zugetropft.

Nach dreistündigem Rühren bei 0 bis 5 °C wurde die entstandene Diazoniumsalzlösung zu 2,09 g (0,01 mol) N,N-Bis(Hydroxyethyl)anilin in 150 g Eiswasser und 10 g konz. Schwefelsäure und 0,5 g Amidoschwefelsäure bei einer Temperatur < 0,5 °C und einem pH-Wert von 1 bis 1,5 zugetropft. Der pH-Wert wurde durch Zugabe von 20 gew.-%iger Natronlauge bei 1 bis 1,5 gehalten. Nach Ruhen über Nacht und Rühren bei Raumtemperatur wurde der ausgefallene Farbstoff abgesaugt, mit Wasser gewaschen und getrocknet. Eine Umkristallisation erfolgte aus Chlorbenzol.

Ausbeute: 2,2 g

| $C_{17}H_{17}N_4O_2S$ (341) | | | | | |
|---|---|---|---|---|---|
| ber.:<br>gef.: | C 59.82<br>C 60.10 | H 5.00<br>H 4.95 | N 16.42<br>N 16.30 | O 9.38<br>O 8.99 | S 9.38<br>S 9.66 |

Analog Beispiel 1 können die in der folgenden Tabelle aufgeführten Produkte erhalten werden.

| Bsp. Nr. | Formel |
|---|---|
| 2 | 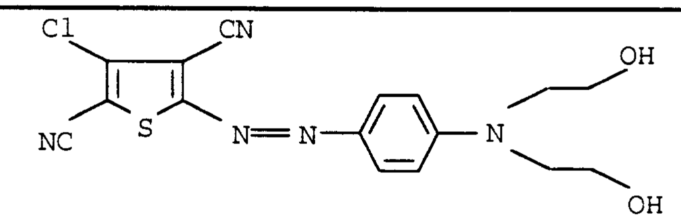 |
| 3 | 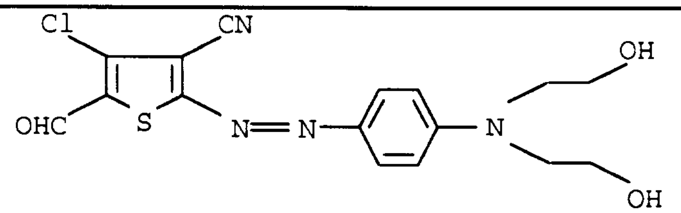 |
| 4 | 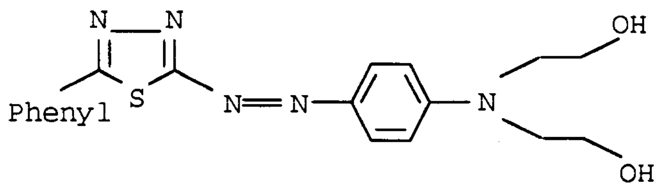 |
| 5 | 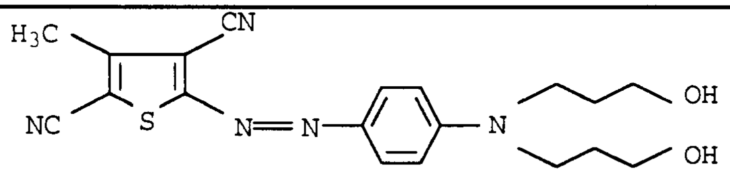 |
| 6 | 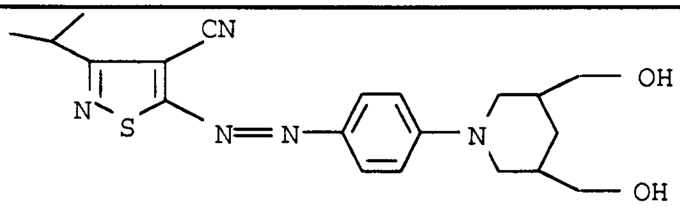 |
| 7 | 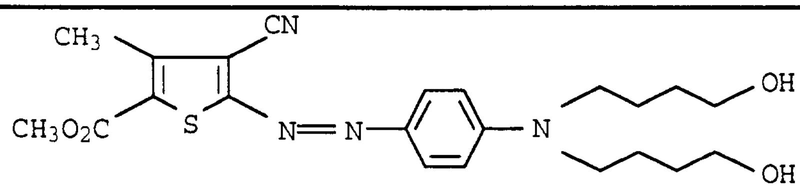 |
| 8 | 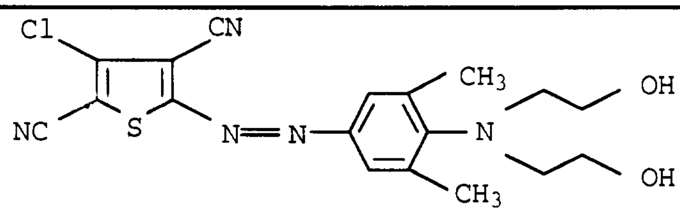 |

| Bsp. Nr. | Formel |
|---|---|
| 9 | 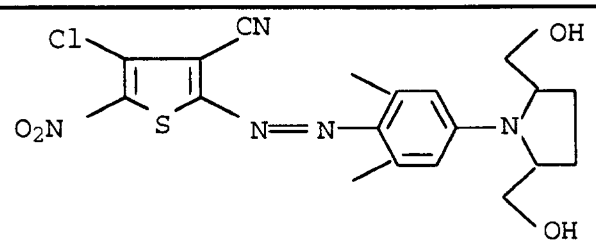 |
| 10 | 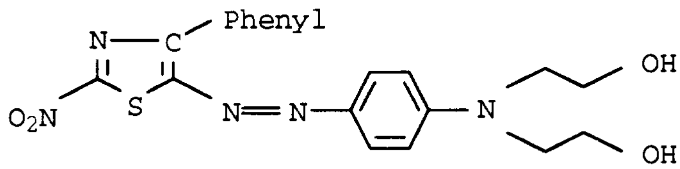 |

II. Herstellung der erfindungsgemäßen Polyester

Beispiel 11

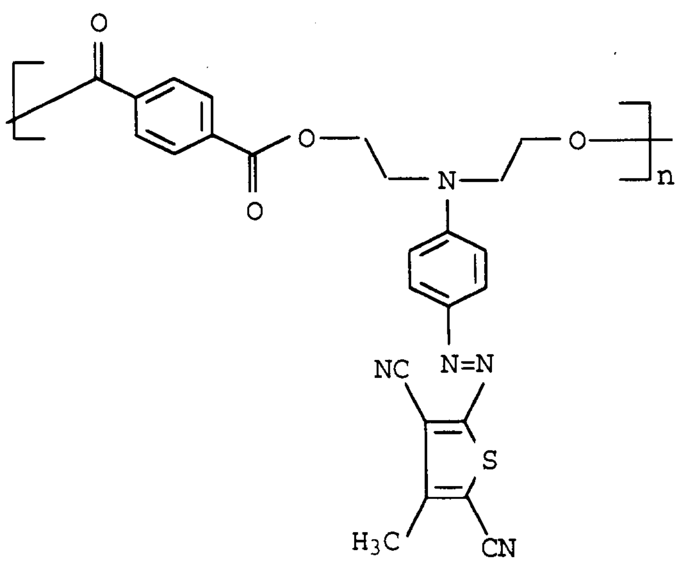

2,02 g (0,01 mol) Terephthalsäurechlorid und 3,41 g (0,01 mol) Azofarbstoff gemäß Beispiel 1 wurden in 100 g trockenem Toluol 5 Stunden unter Rückfluß erhitzt. Das Polymer wurde mit Methanol ausgefällt und mehrfach aus Hexan/Methanol umgefällt. Nach Entfernen des Lösungsmittels wurde der Polyester im Hochvakuum getrocknet. Die quantitative Bestimmung des Polyesters erfolgte durch Elementaranalyse. Die Molekulargewichtsbestimmung erfolgte durch Gelpermeationschromatographie. Die Bestimmung der Glasstufe des Polymeren erfolgte differentialkalorimetrisch.

$\overline{M}_w$ = 34 000 (mittleres Molekulargewicht)

$T_G$ = 105 (Glastemperatur)

Die Beispiele 12 bis 17 für erfindungsgemäße Polyester können Tabelle 2 entnommen werden.

| Bsp. Nr. | Formel | $\overline{M}_w$ | $T_G$ |
|---|---|---|---|
| 12 | 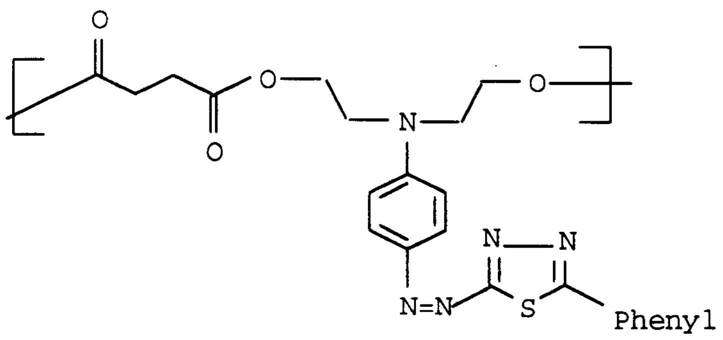 | 11000 | 85 |
| 13 | 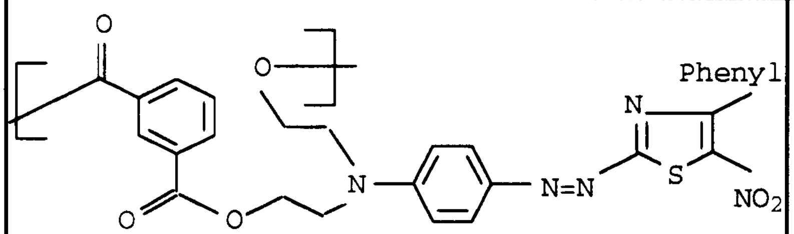 | 13000 | 103 |
| 14 | 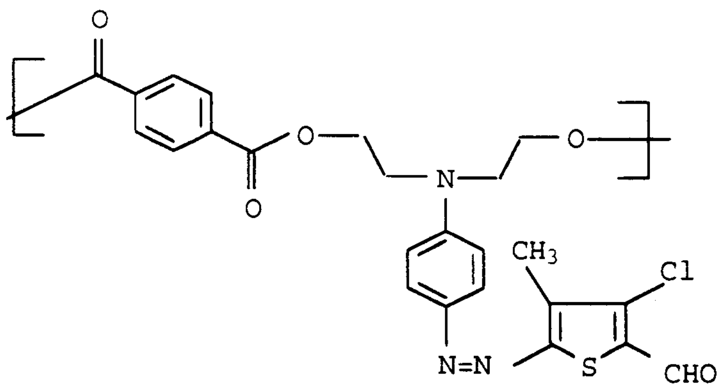 | 14000 | 98 |
| 15 | 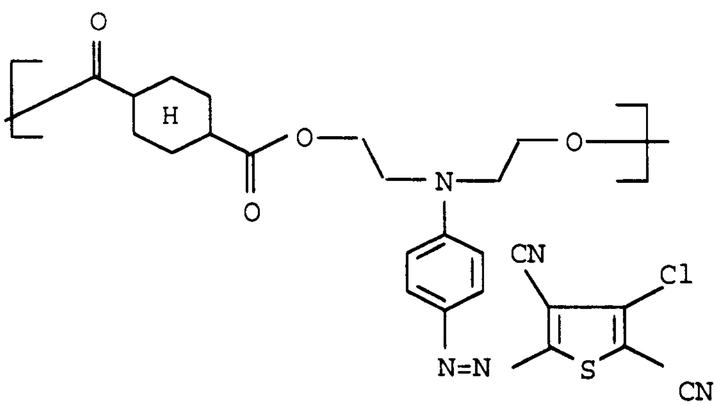 | 23000 | 85 |

| Bsp. Nr. | Formel | $\overline{M}_w$ | $T_G$ |
|---|---|---|---|
| 16 | 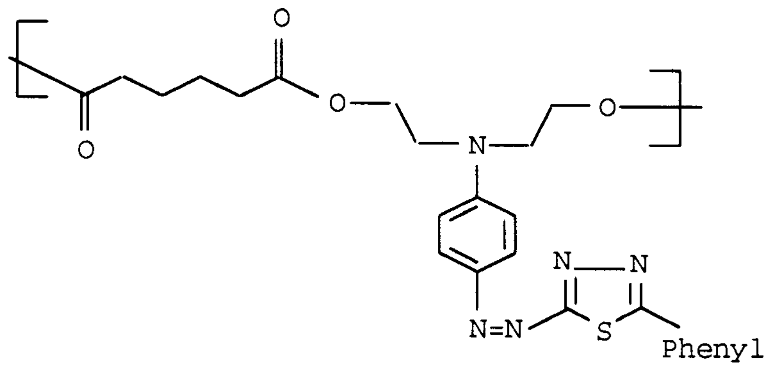 | 14000 | 75 |
| 17 | 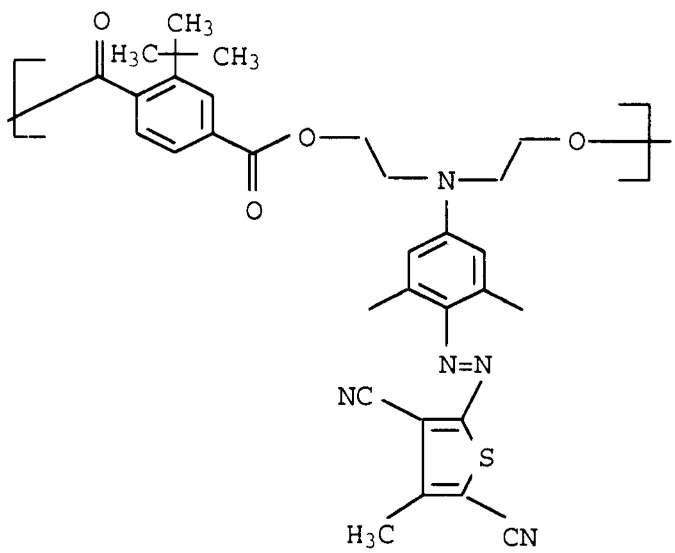 | 20000 | 96 |

III. Schichtenbildung und Polung im elektrischen Feld; Bestimmung des elektrooptischen Koeffizienten

Beispiel 18

2 g des Polyesters aus Beispiel 11 wurden in 30 g N-Methylpyrrolidon gelöst und durch Spincoating zu einer Schicht mit einer Dicke von 50 µm verarbeitet. Die Probe wurde anschließend zwischen zwei transparente Elektroden plaziert. Die Elektroden bestanden aus Glas, belegt mit einer elektrisch leitfähigen und transparenten Indium-Zinn-Oxid-Schicht (ITO-Schicht). Bei einer Temperatur von 100 °C wurde ein elektrisches Feld von 100 V/mm an die Probe angelegt und für 15 Minuten gehalten. Anschließend ließ man abkühlen auf Raumtemperatur und entfernte dann das elektrische Polungsfeld.

Der elektrooptische Koeffizient der gepolten Polyesterprobe wurde anschließend bei einer Laserwellenlänge von 1306 nm mit r = 19 pm/V bestimmt.

(Formeln zur Bestimmung des elektropptischen Koeffizienten können der Literatur entnommen werden - z.B. D.A. Williams, Angew. Chem. 96 (1984) 637.)

Weitere Beispiele für elektrooptische Koeffizienten der erfindungsgemäßen Polyester sind:

| Bsp. Nr. | r [pm/V] |
|---|---|
| 12 | 14 |
| 15 | 16 |

## Patentansprüche

**1.** Polyester mit nichtlinear optischen Chromophoren, dadurch gekennzeichnet, daß sie mittlere Molekulargewichte $\overline{M}_w$ zwischen 5000 und 500 000 aufweisen und Einheiten der allgemeinen Formel (I)

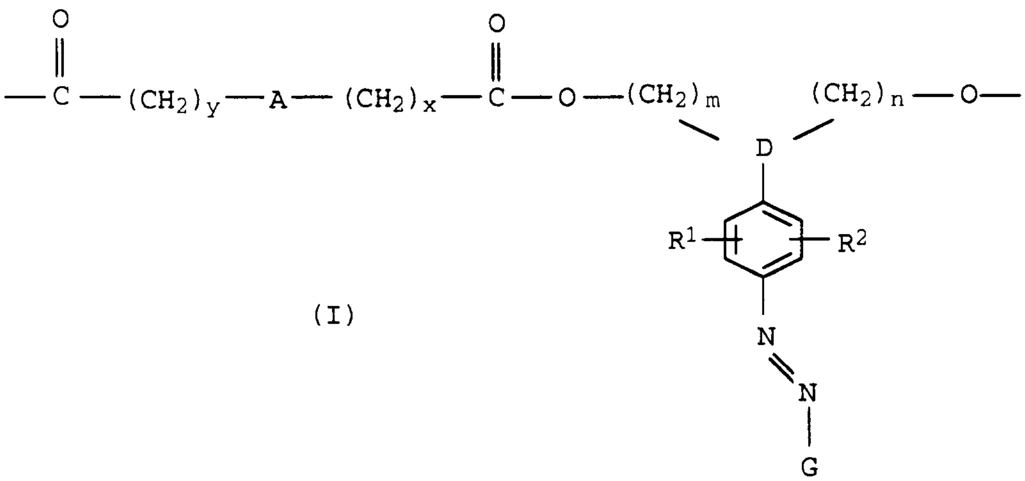

(I)

enthalten, worin

A — für Phenylen, mit 1 bis 4 $C_1$- bis $C_6$-Alkyl- oder $C_1$- bis $C_6$-Alkoxygruppen substituiertes Phenylen, Naphthylen, Cycloalkylen mit 3 bis 8 Kohlenstoffatomen, Alkylen mit 1 bis 10 Kohlenstoffatomen oder eine Einfachbindung,

D — für einen Elektronendonor,

G — für einen heterocyclischen Ring als Elektronenakzeptor,

x und y — für untereinander gleiche oder verschiedene Zahlen von 0 bis 10,

m und n — für untereinander gleiche oder verschiedene Zahlen von 1 bis 10 stehen,

$R^1$ und $R^2$ — untereinander gleich oder verschieden sind und für Wasserstoff, Alkyl mit 1 bis 6 Kohlenstoffatomen, Alkoxy mit 1 bis 6 Kohlenstoffatomen, durch Phenyl oder $C_1$- bis $C_4$-Alkoxy substituiertes Alkyl, CN, $NO_2$, $SO_3H$, CHO oder eine vernetzungsfähige Gruppierung stehen.

**2.** Polyester nach Anspruch 1, dadurch gekennzeichnet, daß G für einen Rest der allgemeinen Formeln

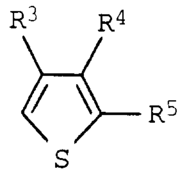 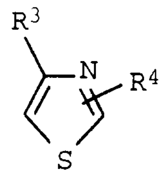 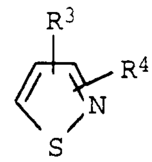 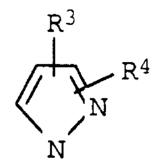 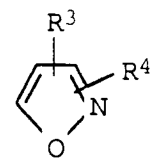

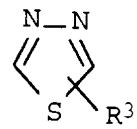 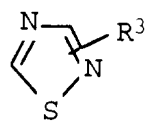 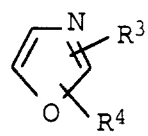 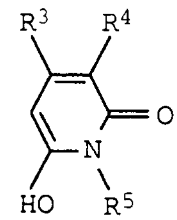

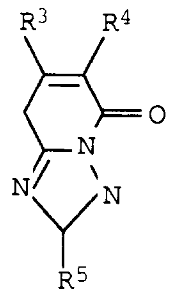 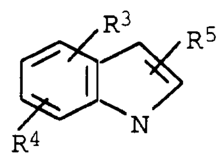 oder 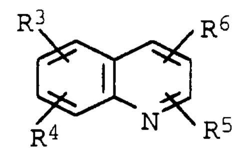

steht, worin

$R^3$ bis $R^6$ untereinander gleich oder verschieden sind und für Alkyl mit 1 bis 10 Kohlenstoffatomen, Cycloalkyl mit 3 bis 8 Kohlenstoffatomen, Alkoxy mit 1 bis 8 Kohlenstoffatomen, Halogen, CN, $NO_2$, $CONH_2$, $CONR^7_2$, $COOR^7$, $(CH_2)_z$-$COOR^7$,
$R^7$ = Alkyl mit 1 bis 10 Kohlenstoffatomen und z = 1 bis 10 oder Alkenyl mit 2 bis 10 Kohlenstoffatomen stehen oder jeweils zwei der Reste $R^3$ bis $R^6$ miteinander anellierte Ringe bilden.

**3.** Polyester nach einem der Ansprüche 1 oder 2, dadurch gekennzeichnet, daß in der allgemeinen Formel (I) D für $NR^8$ steht, worin $R^8$ $C_1$- bis $C_6$-Alkyl, $C_2$- bis $C_6$-Alkenyl, $C_5$- bis $C_7$-Cycloalkyl, Phenyl, Tolyl, Benzyl oder eine vernetzungsfähige Gruppierung bedeuten.

**4.** Polyester nach einem der Ansprüche 1 bis 3, dadurch gekennzeichnet, daß die vernetzungsfähigen Gruppierungen Zimtsäure-, Oxiran-, Acrylat-, Methacrylat-, Vinyl-, Vinylester-, Vinylether-, CN-, $NO_2$-, -$SO_3H$ oder -CHO Reste sind.

**5.** Verwendung der Polyester nach einem der vorhergehenden Ansprüche in der nichtlinearen Optik.

**6.** Verwendung der Polyester nach einem der Ansprüche 1 bis 4 in Bauelementen für die Nachrichtentechnik.

Europäisches Patentamt

# EUROPÄISCHER RECHERCHENBERICHT

Nummer der Anmeldung

EP 94107463.5

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| A | DE - A - 4 132 685 (BASF) * Ansprüche 1,3 * -- | 1,3,4 | C 09 B 69/10<br>C 08 G 63/685<br>G 02 F 1/35 |
| A | EP - A - 0 350 113 (AKZO N.V.) * Ansprüche 1,4,5 * -- | 1,3,4 | |
| A | US - A - 5 124 431 (OHTA et al.) * Zusammenfassung * -- | 1 | |
| D,A | US - A - 4 757 130 (DE MARTINO) * Ansprüche 1,8,19 * ---- | 1,3,4 | |
| | | | RECHERCHIERTE SACHGEBIETE (Int. Cl.5) |
| | | | C 09 B<br>C 08 G<br>G 02 F |

Der vorliegende Recherchenbericht wurde für alle Patentansprüche erstellt.

| Recherchenort | Abschlußdatum der Recherche | Prüfer |
|---|---|---|
| WIEN | 13-07-1994 | REIF |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument